# EUROPEAN PATENT APPLICATION

(11) **EP 3 147 867 A1**
(43) Date of publication of application: **29.03.2017**
(21) Application number: 16190472.7
(22) Date of filing: 23.09.2016
(51) Int. Cl.: G06T 15/06, G06T 17/00

(54) **APPARATUS FOR AND METHOD OF TRAVERSING TREE**

(30) Priority: 24.09.2015 KR 20150135548
(71) Applicant: Samsung Electronics Co., Ltd., Suwon-si, Gyeonggi-do 16677 (KR)
(72) Inventor: HWANG, Seokjoong, 16678 Gyeonggi-do (KR); SHIN, Youngsam, 16678 Gyeonggi-do (KR); LEE, Wonjong, 16678 Gyeonggi-do (KR)
(74) Representative: Portch, Daniel

(57) **Abstract**

A ray tracing method of traversing a tree, includes, based on a determination of whether a plurality of child nodes of a parent node of the tree are valid traversal targets for a first ray, determining any one of the plurality of child nodes to be a target node, and storing information regarding a remaining child node, of the plurality of child nodes, that is not the target node in a memory by using a path code of the remaining child node as a key value.

## Description

### FIELD OF THE INVENTION

One or more embodiments relate to an apparatus and method of traversing a tree.

### BACKGROUND OF THE INVENTION

Three-dimensional (3D) rendering refers to an image processing method whereby 3D object data is synthesized into an image viewed from a viewpoint of a camera, e.g. a virtual camera. Ray tracing refers to a process of tracing a point where scene objects to be rendered and a ray intersect from the viewpoint. Ray tracing typically includes traversal of a tree as part of an acceleration structure and an intersection test between a ray and a corresponding primitive indicated by the acceleration structure. For the traversal and the intersection test, a large computational load and a broad memory bandwidth may cause problems associated with high computer resource use during graphics rendering, such as lag, delay, misrendering, and/or jutter, and thus, this represents a computer-related problem in for 3D rendering.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A ray tracing method of traversing a tree, includes, based on a determination of whether a plurality of child nodes of a parent node of the tree are valid traversal targets for a first ray, determining any one of the plurality of child nodes to be a target node, and storing information regarding a remaining child node, of the plurality of child nodes, that is not the target node in a memory by using a path code of the remaining child node as a key value.

Thus, there is proposed a concept for managing information which is needed in searching for a binary tree instead of a stack memory in a ray tracing system. This may be applied to a dedicated (e.g. hardware) ray tracing system implementation and may be applied to efficiently support the software-based ray tracing in a Graphics Processing Unit (GPU), etc.

For example, embodiments may provide a method of significantly reducing the data amount which is occupied by an individual ray, thus minimizing a performance reduction and not increasing the data amount of the individual node. Further, there may be provided a method of enhancing memory efficiency by reducing the space which is used to express the address data in the node of a space partition acceleration structure.

Proposed embodiments may store the address (and decoding information) of the node by using the path information of the node to be visited later at the binary tree search in the ray tracing system and may then obtain the address (and decoding information) of the node through the key when necessary. Thus, there may be provided: a method of coding path information with a key; a method of storing information of an address (and decoding) of node by using key and obtaining the information; and a method of using the memory output result.

In some embodiments, the encoding for the path information may be based on the depth information on the tree of the node to be visited next and the direction (left/right) from the parent node.

Proposed embodiments may comprise storing and obtaining information on the node in the memory by encoding path information of nodes and using this as key at the time of a binary tree search in a ray tracing system. At this time, the information on the node may become the node address and node decoding information.

Embodiments may avoid occupying the independent stack memory space for each ray. Accordingly, the data amount which is occupied by each ray may be minimized. There may also be no process of moving to the needed node through the revisit, and thus embodiments may be more effective than conventional methods.

Embodiments may therefore be applied to a large scale parallel search of a binary tree in a ray tracing system, for example.

The method may further include traversing the remaining child node for a second ray by reading the information of the remaining child node from the memory using the path code of the remaining child node as the key value.

The memory may be shared by a plurality of tree traversing units traversing different rays.

The memory may be cache memory.

Path information regarding the parent node, as a current target node, and a relative location of a first child of the plurality of child nodes with respect to the first ray is compared to a relative location of a second child node of the plurality of child nodes with respect to the first ray, may be used to determine the target node as a next target node.

When the determination of whether the plurality of child nodes are valid traversal targets indicates that none of the plurality of child nodes are a valid traversal target and a bit stack indicating whether information corresponding to a non-root node of the tree are stored in the memory, traversal of the tree may be terminated.

When the determination of whether the plurality of child nodes are valid traversal targets indicates that none of the plurality of child nodes are a valid traversal target or there are not child nodes for the parent node, traversal of the parent node may be terminated, a path code of a next target node may be derived from path information corresponding to the parent node, as a current target node, a value of a bit stack, indicating whether information corresponding to a non-root node is stored in the memory, may be updated, and information corresponding to the next target node may be obtained from the memory by using the path code of the next target node as a key value.

Information corresponding to the next target node may include an address and decoding information.

The method may further include determining a valid traversal target from the plurality of child nodes via an intersection test.

In the storing of the information, information indicating whether information corresponding to the remaining child node is stored in the memory is stored in a bit stack for every depth of the tree.

A non-transitory computer readable recording medium having recorded thereon a computer program to control at one or more processing devices may implement the method.

A ray tracing apparatus includes tree traversing processor units each configured to, based on a determination of whether a plurality of child nodes of a parent node of the tree are valid traversal targets for a first ray, determine any one of the plurality of child nodes to be a target node, and a memory unit configured to store information regarding a remaining child node, of the plurality of child nodes, that is not the target node in a memory by using a path code of the remaining child node as a key value.

Each of the tree traversing processor units may each be further configured to determine the remaining child node for a second ray by reading the information of the remaining child node from the memory using the path code of the remaining child node as the key value.

The memory may be configured to be shared by at least two of the tree traversing processor units traversing different rays.

The memory may be cache memory.

Path information regarding the parent node, as a current target node, and a relative location of a first child of the plurality of child nodes with respect to the first ray may be compared to a relative location of a second child node of the plurality of child nodes with respect to the first ray, may be used by each of the tree traversing processor units to determine the target node as a next target node.

When the determination, by each of the tree traversing processor units, of whether the plurality of child nodes are valid traversal targets indicates that none of the plurality of child nodes are a valid traversal target and a bit stack indicating whether information corresponding to a non-root node of the tree are stored in the memory, terminate traversal of the tree.

When the determination of whether the plurality of child nodes are valid traversal targets by each of the tree traversing processor units indicates that none of the plurality of child nodes are a valid traversal target or there are not child nodes for the parent node, traversal of the parent node may be terminated, a path code of a next target node may be derived from path information corresponding to the parent node, as a current target node, a value of a bit stack, indicating whether information corresponding to a non-root node is stored in the memory unit, may be updated, and information corresponding to the next target node may be obtained from the memory unit by using the path code of the next target node as a key value.

Information corresponding to the next target node may include an address and decoding information.

Each of the tree traversing units may be configured to determine a valid traversal target from the plurality of child nodes via an intersection test.

Each of the tree traversing units may be configured to store information indicating whether information corresponding to the remaining child node is stored in the memory unit is stored in a bit stack for every depth of the tree.

A ray tracing apparatus includes a first traversal unit configured to traverse an acceleration tree for a first ray by reading graphic information for a bounding volume by accessing a memory using the path code of a corresponding node of the acceleration tree as the key value, and a second traversal unit configured to traverse the acceleration tree for a second ray by the reading graphic information for the bounding volume by accessing the memory using the path code of the corresponding node of the acceleration tree as the key value. The graphic information for the bounding volume stored in the memory is graphic information read from an exterior memory stored to the memory during a previous traversal of the acceleration tree by another ray.

Other features and aspects will be apparent from the following detailed description, the drawings, and the claims.

### BRIEF DESCRIPTION OF THE DRAWINGS

FIG. 1 is a diagram illustrating an example of ray tracing.
FIG. 2 is a block diagram illustrating an example of a ray tracing core.
FIG. 3 is a block diagram illustrating an example of ray tracing performed by a ray tracing core.
FIG. 4 is a diagram illustrating an example of a method of ray tracing.
FIG. 5 is a diagram illustrating an example of a method of ray tracing using an acceleration structure.
FIG. 6 is a block diagram illustrating a tree traversing apparatus according to an embodiment.
FIG. 7 is a flowchart illustrating a method of traversing a tree, according to an embodiment.
FIG. 8 is a flowchart illustrating an example of a method used by a tree traversing unit to traverse a tree.
FIGS. 9, 10, 11, 12, 13, 14, 15, 16, 17, 18, 19, 20, 21, and 22 are diagrams illustrating a method of traversing a tree according to one or more embodiments.

### DETAILED DESCRIPTION

In addition, although the terms used in the inventive concept are selected from generally known and used terms, some of the terms mentioned in the description of the inventive concept have been selected by the applicant at his or her discretion, the detailed meanings of which are described in relevant parts of the description herein. Furthermore, it is required that the inventive concept is understood, not simply by the actual terms used but by the meaning of each term lying within.

While such terms as "first," "second," etc., may be used to describe various components, such components must not be limited to the above terms. The above terms are used only to distinguish one component from another.

The terms used in the inventive concept are merely used to describe particular embodiments, and are not intended to limit the inventive concept. An expression used in the singular encompasses the expression of the plural, unless it has a clearly different meaning in the context. Furthermore, throughout the specification, it will be understood that when a portion is referred to as being "connected to" another portion, it can be "directly connected to" the other portion or "electrically connected to" the other portion via another element.

The use of the terms "a" and "an" and "the" and similar referents in the context of describing the inventive concept (especially in the context of the following claims) are to be construed to cover both the singular and the plural. Also, the operations of all methods described herein can be performed in any suitable order unless otherwise indicated herein or otherwise clearly contradicted by context. Embodiments are not limited to the described order of the operations.

Appearances of the phrases 'in some embodiments,' 'in certain embodiments,' 'in various embodiments,' and similar language throughout this specification may, but are not necessarily, all referring to a same embodiment, and should not be understood to mean 'one or more but not necessarily all embodiments' unless expressly specified otherwise.

Embodiments may be described in terms of block components and various processing operations. Such blocks may be realized by any number of hardware and components configured to perform the operations. For example, the embodiments may employ various integrated circuit components, e.g., memory elements, processing elements, logic elements, look-up tables, and the like, which may carry out a variety of tasks under the control of one or more microprocessors or other control devices. Similarly, where elements are implemented using programming of hardware, the embodiments may be implemented with any programming or scripting language such as C, C++, Java, assembler, or the like, with the various algorithms being implemented with any combination of data structures, objects, processes, routines or other programming elements that are encoded or included in/on a non-transitory computer or processor readable- medium. Aspects may be implemented in algorithms that execute on one or more processors. Furthermore, the embodiments could employ any number of conventional techniques for electronics configuration, signal processing and/or control, data processing and the like.

Furthermore, any connecting lines, or connectors shown in the various figures presented are intended to represent exemplary relationships and/or physical or logical couplings between the various elements. It should be noted that many alternative or additional relationships, physical connections or logical connections may be present in a practical device.

Reference will now be made in detail to embodiments, examples of which are illustrated in the accompanying drawings, wherein like reference numerals refer to like elements throughout. In this regard, the embodiments may have different forms and should not be construed as being limited to the descriptions set forth herein. Accordingly, embodiments are merely described below, by referring to the figures, to explain aspects of the present description.

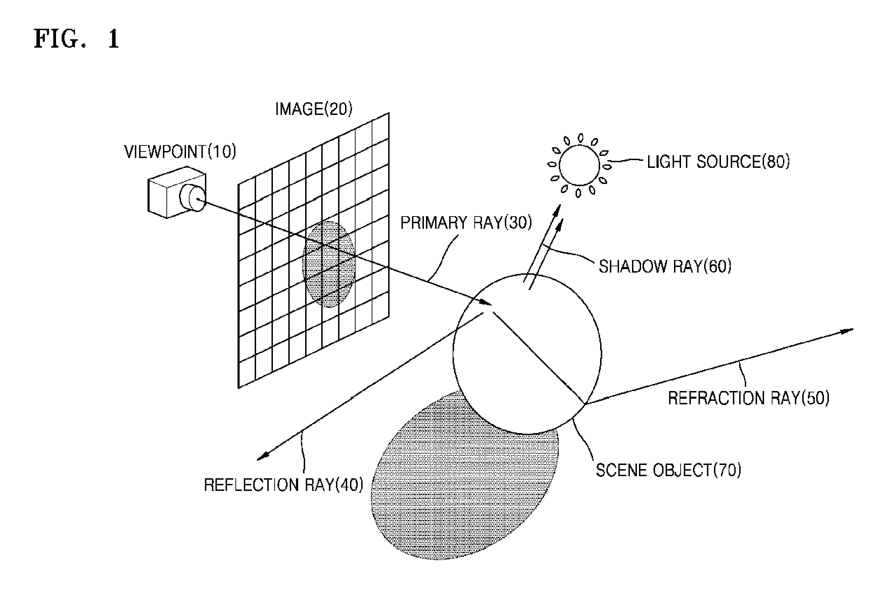

FIG. 1 is a diagram illustrating an example of ray tracing. Referring to FIG. 1, in three-dimensional (3D) modeling, a ray tracing core may determine a viewpoint 10 and an image 20 according to the viewpoint 10. When the viewpoint 10 and the image 20 are determined, the ray tracing core generates a ray from the viewpoint 10 with respect to each pixel of the image 20.

Elements of ray tracing will be described. A primary ray 30 is generated from the viewpoint 10. The primary ray 30 intersects a scene object 70 after passing through the image 20. A reflection ray 40 and a refraction ray 50 are generated at an intersection point between the primary ray 30 and the scene object 70. A shadow ray 60 is generated at the intersection point, and extends toward a light source 80. The reflection ray 40, the refraction ray 50, and the shadow ray 60 are referred to as secondary rays. The scene object 70 denotes an object that is to be rendered with respect to the image 20. The scene object 70 includes a plurality of primitives.

The ray tracing core analyzes the primary ray 30, the secondary rays, that is, the reflection ray 40, the refraction ray 50, and the shadow ray 60, and rays derived from the secondary rays. The ray tracing core determines a color value of each of pixels that form the image 20 based on an analysis result, such as through a shader of the ray tracing core. The ray tracing core determines color values of pixels by considering characteristics of the scene object 70.

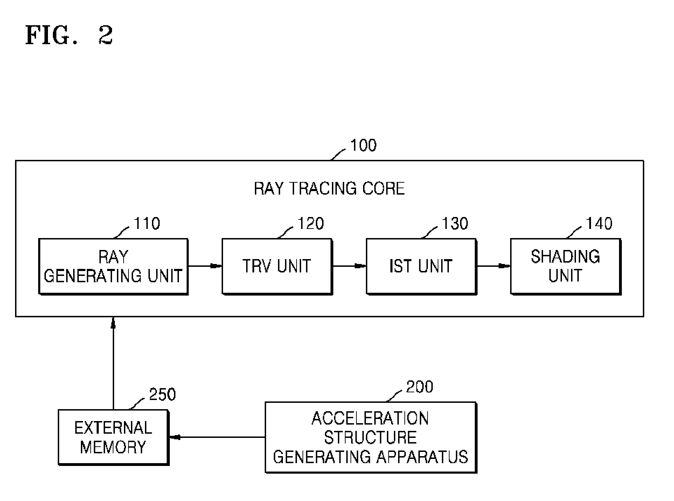

FIG. 2 is a block diagram illustrating an example of ray tracing core 100. Referring to FIG. 2, the ray tracing core 100 includes a ray generating unit 110, a traversal (TRV) unit 120, an intersection test (IST) unit 130, and a shading unit 140. In FIG. 2, the TRV unit 120 and the IST unit 130 are shown as included in the ray tracing core 100, but the TRV unit 120 and the IST unit 130 may also be included separately as other hardware. The ray tracing core 100 illustrated in FIG. 2 includes only elements related to embodiments. However, it will be obvious to one of ordinary skill in the art, having a full understanding of the present specification, that other general-use elements than those illustrated in FIG. 2 may be further included in the ray tracing core 100 and some of the elements of FIG. 2 may not be included in ray tracing core 100, depending on an embodiment.

The ray tracing core 100 traces an intersection point between generated rays and objects located in 3D space, and determines color values of pixels that form an image. In other words, the ray tracing core 100 searches for an intersection point between rays and objects, generates a secondary ray according to characteristics of an object at the intersection point, and determines a color value of the intersection point.

The ray tracing core 100 may use results of previous traversal and previous intersection tests in traversal of an acceleration structure and an intersection test. That is, the ray tracing core 100 may perform rendering faster by applying results obtained from previous rendering to the current rendering.

The ray generating unit 110 generates a primary ray and a secondary ray. The ray tracing core 100 generates a first ray from a viewpoint. The ray generating unit 110 generates a reflection, refraction, and/or shadow secondary ray at an intersection point between the primary ray and an object. Also, another secondary ray may be generated at an intersection point between the above secondary ray and the object. The ray generating unit 110 may generate a reflection ray, a refraction ray, and/or a shadow ray less than or equal to a threshold number of times, or may determine the number of times to generate a reflection ray, a refraction ray, and/or a shadow ray according to characteristics of an object.

The TRV unit 120 receives information about a ray generated by the ray generating unit 110. The generated ray may be a primary ray, a secondary ray, or a ray derived from the secondary ray, as described above. For example, regarding a primary ray, the TRV unit 120 may receive information about a viewpoint and a direction of a generated ray. Also, regarding a secondary ray, the TRV unit 120 may receive information about a starting point and a direction of a secondary ray. A starting point of a secondary ray denotes a point at which a primary ray has hit an object. A viewpoint or a starting point may be expressed by coordinates, and a direction may be expressed by a vector, for example.

The TRV unit 120 reads information about an acceleration structure from an external memory 250. An acceleration structure is generated by an acceleration structure generating apparatus 200, and the generated acceleration structure is stored in the external memory 250. An acceleration structure refers to a structure including position information of objects in 3D space. For example, an acceleration structure may be a K-dimensional (KD) tree or a bounding volume hierarchy (BVH).

The TRV unit 120 traverses an acceleration structure to output an object or a leaf node that a ray has hit. For example, the TRV unit 120 searches for nodes included in an acceleration structure to output a leaf node that a ray has hit from among lowermost-ranking leaf nodes, to the IST unit 130. In other words, the TRV unit 120 determines which of the bounding boxes that form an acceleration structure are hit by a ray. The TRV unit 120 determines which object included in such a bounding box is hit by a ray. Information about a hit object is stored in a TRV cache. A bounding box may refer to a unit of space, e.g., a three dimensional space, including a plurality of objects or a plurality of primitives and may be expressed in different forms according to different acceleration structures. A TRV cache refers to a memory for storing data used by the TRV unit 120 in traversal.

The TRV unit 120 may traverse an acceleration structure based on results of previous rendering apparatus. The TRV unit 120 may traverse an acceleration structure via the same route as previous rendering based on the result of the previous rendering stored in a TRV cache. For example, when the TRV unit 120 traverses an acceleration structure for a generated ray, the TRV unit 120 may traverse a bounding box that is hit by a previous ray that has the same corresponding viewpoint and the same direction as the generated ray. The TRV unit 120 may traverse an acceleration structure by referring to a search route with respect to a previous ray.

The IST unit 130 receives an object or a leaf node that is hit by a ray, from the TRV unit 120 and reads information from the external memory 250 about primitives included in a hit object. Information about the read primitives may be stored in an IST cache. An IST cache denotes a memory to store data used by the IST unit 130 in an intersection test.

The IST unit 130 conducts an intersection test between a ray and a primitive to output a primitive hit by a ray and an intersection point. The IST unit 130 receives information from the TRV unit 120 about which object is hit by a ray and tests which primitives included in a hit object are hit by a ray. In response to the IST unit 130 finding a primitive hit by a ray, the IST unit 130 outputs an intersection point indicating which point of the hit primitive intersects the ray. The intersection point may be output to the shading unit 140 in coordinate form, for example.

The IST unit 130 may conduct an intersection test based on results of previous rendering. The IST unit 130 may first conduct an intersection test on the same primitive as that of a previous rendering, where the previous results of the previous rendering that are stored in the IST cache. For example, when the IST unit 130 conducts an intersection test between a generated ray and a primitive, the IST unit 130 may conduct an intersection test on a primitive hit by a previous ray having the same viewpoint and the same direction as the generated ray.

The shading unit 140 determines a color value of a pixel based on information about an intersection point, received from the IST unit 130, and properties of a material of the intersection point. The shading unit 140 determines a color value of a pixel by considering a basic color of a material of the intersection point and effects due to a light source.

The ray tracing core 100 receives data for ray tracing from the external memory 250. An acceleration structure generated by the acceleration structure generating unit 200 or geometry data indicating information about primitives is stored in the external memory 250. A primitive may be a polygon such as a triangle, a rectangle, etc., and geometry may indicate information about a vertex and a position of primitives included in an object.

The acceleration structure generating apparatus 200 generates an acceleration structure including position information about objects in 3D space. The acceleration structure generating apparatus 200 may generate various types of acceleration structures. For example, an acceleration structure may be generated by splitting 3D space in a hierarchical tree structure, and the acceleration structure generating apparatus 200 may generate a structure indicating a relationship between objects in 3D space by applying BVH or KD tree. The acceleration structure generating apparatus 200 may determine a maximum number of primitives of a leaf node and a depth of tree and generate an acceleration structure based on the determined maximum number and the determined depth of tree.

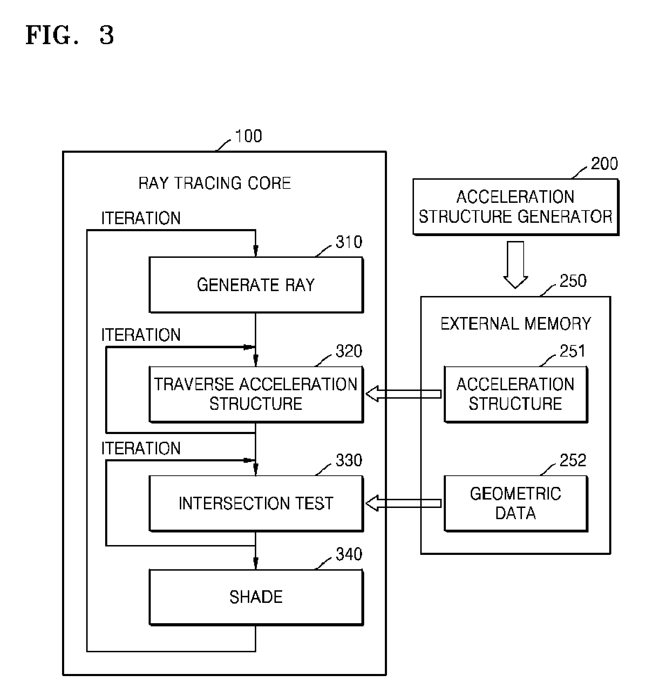

FIG. 3 is a block diagram illustrating an example of ray tracing performed by a ray tracing core. As only an example, the ray tracing core may have the structure of the ray tracing core 100 shown in FIG. 2. Accordingly, descriptions above of the ray tracing core 100 may also apply to the ray tracing of FIG. 3.

In operation 310, the ray tracing core 100 generates a ray. The ray tracing core 100 generates a primary ray, a secondary ray, and/or rays derived from the secondary ray.

In operation 320, the ray tracing core 100 traverses an acceleration structure read out from the external memory 250. The ray tracing core 100 detects a bounding box hit by a ray, by traversing the acceleration structure 251 based on a viewpoint and a direction of generated rays. The ray tracing core 100 detects an object hit by a ray from among objects included in the hit bounding box. The ray tracing core 100 repeats traversing the acceleration structure 251 until a hit object is detected. For example, the ray tracing core 100 traverses an acceleration structure along a predetermined route, and when a leaf node on the searched route is not hit by a ray, the ray tracing core 100 traverses other routes in the acceleration structure.

The ray tracing core 100 may sequentially traverse all routes but may first traverse a predetermined route based on search information of a previous ray. For example, the ray tracing core 100 may search for a route in which a hit leaf node is included in a previous node when the previous ray has the same or similar viewpoint and is the same or in a similar direction as a current ray.

In operation 330, the ray tracing core 100 conducts an intersection test based on geometric data 252 of primitives read out from the external memory 250. The ray tracing core 100 iterates an intersection test until a hit primitive is detected. For example, the ray tracing core 100 conducts an intersection test on a primitive, and when any primitive is hit by a ray, the ray tracing core 100 conducts an intersection test on another primitive.

The ray tracing core 100 may sequentially conduct an intersection test on all primitives but may also first test a predetermined primitive based on information about an intersection test of a previous ray. For example, the ray tracing core 100 may first conduct an intersection test on a primitive that is hit by a previous ray when the previous ray and a current ray have the same or similar viewpoint and are in the same or similar direction.

In operation 340, the ray tracing core 100 conducts shading of a pixel based on the intersection test. After operation 340 is completed, the ray tracing core 100 proceeds to operation 310 for another pixel that forms an image. In this manner, the ray tracing core 100 iterates operations 310 through 340 with respect to all pixels that form the image.

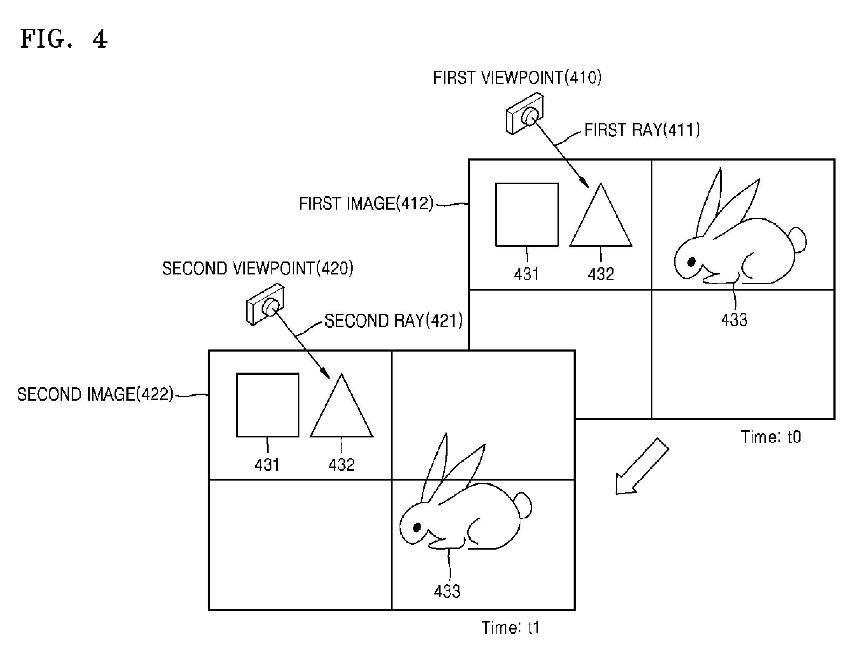

FIG. 4 is a diagram illustrating an example of a method of ray tracing using an acceleration structure. Referring to FIG. 4, a first image 412 is an image that is rendered at t0, and a second image 422 is an image that is rendered at t1. As only a rabbit 433 moves in the first image 412 and the second image 422 and a rectangle 431 and a triangle 432 do not move, the first image 412 and the second image 422 are similar to each other. Accordingly, the ray tracing core 100 may conduct rendering with respect to the second image 421 by using a result of the rendering the first image 412. For example, when a first viewpoint 410 and a second viewpoint 420 are at the same position, and a first ray 411 and a second ray 421 extend in the same direction, the ray tracing core 100 may accelerate ray tracing of the second ray 421 by applying a result of a ray tracing with respect to the first ray 411. For example, the TRV unit 120 of the ray tracing core 100 may first traverse a bounding box hit by the first ray 411 when conducting a search with respect to the second ray 421. Also, the IST unit 130 of the ray tracing core 100 may first conduct an intersection test on a triangle 432 hit by the first ray 411 during an intersection test on the second ray.

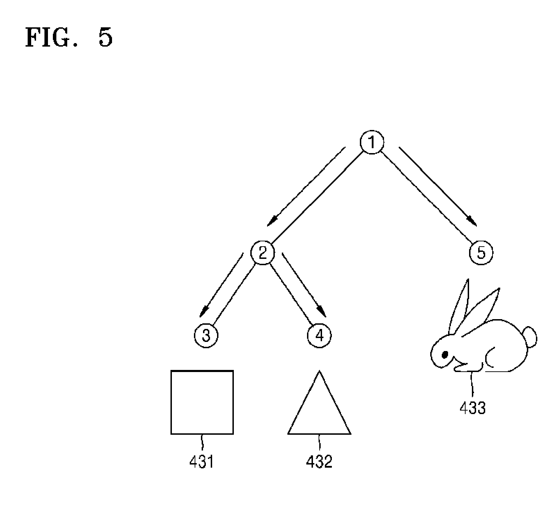

FIG. 5 is a diagram illustrating an example of a method of ray tracing using an acceleration structure, such as the one shown in FIG. 4. Referring to FIG. 5, an acceleration structure includes five nodes, node 1 through node 5, and nodes 3 through 5 each denote a leaf node.

The TRV unit 120 may search an acceleration structure along three routes. First, the TRV unit 120 may traverse an acceleration structure along node 1, node 2, and node 3 which forms or represents a first route. Secondly, the TRV unit 120 may traverse an acceleration structure along node 1, node 2, and node 4, which forms or represents a second route. Thirdly, the TRV unit 120 may traverse an acceleration structure along node 1 and node 5 which forms or represents a third route. When the TRV unit 120 conducts a search with respect to the second ray 421, the TRV unit 120 first traverses the second route in which a triangle 432 hit by the first ray 411 was searched. Accordingly, the TRV unit 120 may omit an operation of traversing the first route or the third route.

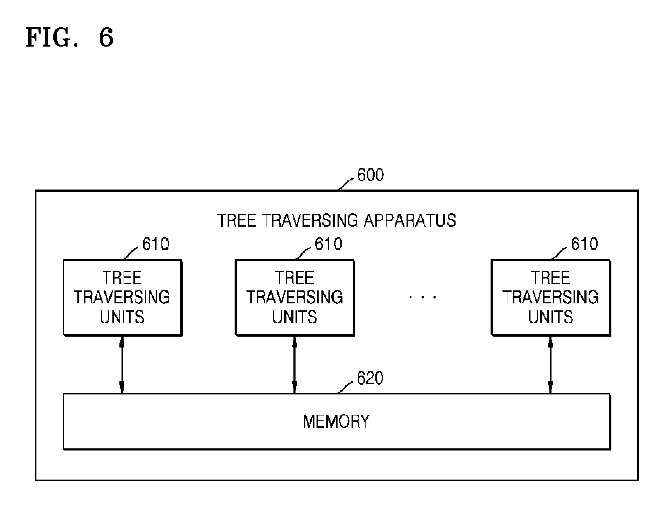

FIG. 6 is a block diagram illustrating a tree traversing apparatus according to an embodiment. A tree traversing apparatus 600 may include a plurality of tree traversing units 610 and a memory 620.

An acceleration tree may include a plurality of nodes, and the tree traversing apparatus 600 traverses the nodes. The tree traversing apparatus 600 performs an intersection test to determine whether child nodes of a node are valid traversal targets.

Each of the plurality of tree traversing units 610 may independently traverse a tree. Furthermore, each of the plurality of tree traversing units 610 may independently access the memory 620.

The tree traversing units 610 use the memory 620 to traverse a tree. The tree traversing units 610 may store information regarding which nodes to traverse in the memory 620. Information stored in the memory 620 regarding a node may include an address of the corresponding node or decoding information. Decoding information may include parameters for decoding information regarding a compressed bounding box for the node. Decoding information may be used to randomly obtain data of nodes in a hierarchically connected tree structure. Therefore, the tree traversing units 610 may decode compressed data of nodes using decoding information stored in the memory 620.

As shown in FIG. 6, the tree traversing units 610 share the memory 620. For example, the memory 620 may be a cache memory, but is not limited thereto.

The tree traversing units 610 determines any one of a plurality of child nodes as a target node. In a tree structure, any one node may include two child nodes, for example. The tree traversing units 610 may determine path information regarding a target node by using path information regarding a current node and a relative location of the determined target node.

The tree traversing units 610 obtain node data of the target node and perform a calculation based on the node data. For example, the tree traversing units 610 may check whether child nodes of a target node intersect with a ray by using node data. In other words, the tree traversing units 610 determine a valid traversal target from child nodes by performing an intersection test. A child node intersecting with a ray becomes a valid traversal target. If both of two child nodes are valid traversal targets, the tree traversing units 610 may determine any one of the child nodes as a target node and may store information regarding the other child node in the memory 620.

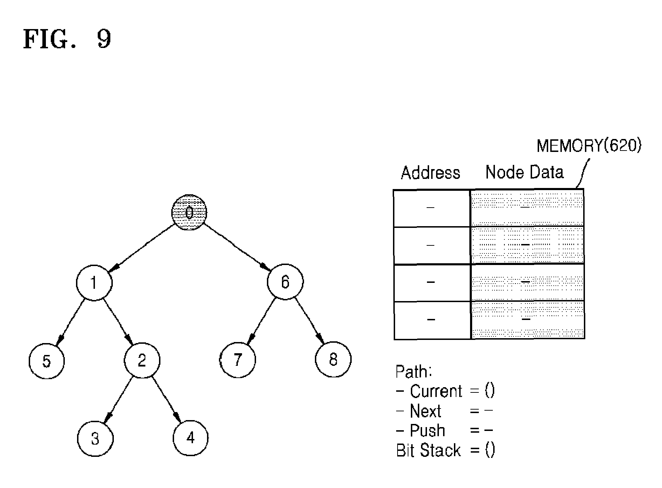

The tree traversing units 610 store information regarding the other child node by using a path code as a key value. The tree traversing units 610 determine an address of the memory 620 by using path information regarding the other child node as a key value and stores information regarding the other child node at the determined address. A method by which the tree traversing units 610 determine an address of the memory 620 will be described below with reference to FIG. 9.

The tree traversing units 610 may access the memory 620 using a path code. The tree traversing units 610 may use the path code to store information regarding a node in the memory 620 or to read out information regarding a node from the memory 620.

A path code is a code indicating a relative location of a node included in a tree. A path code may be represented as binary code. For example, a path of a left node may be indicated by a binary 0, whereas a path of a right node may be indicated by a binary 1. Thus, the left node located at a second depth from a root node may be indicated by a binary 00. However, these codes indicating traversal paths are merely examples, and the traversal paths may be indicated via various other codes.

If a plurality of child nodes are valid traversal targets, the tree traversing units 610 determines a target node by using addresses of the child nodes stored in a current node. If no child node is a valid traversal target, the tree traversing units 610 reads out information regarding a node from the memory 620 and determines a target node. A method by which the tree traversing units 610 determines a next target node will be described below with reference to FIG. 9.

A tree may be used in a ray tracing system. A ray tracing system uses a tree to determine whether a ray intersects with a bounding box. For example, the tree traversing units 610 may determine whether respective rays intersect with nodes. Each of the tree traversing units 610 independently receives a ray and traverses the tree to determine a node intersecting with the ray. The tree traversing units 610 determine whether rays intersect with child nodes of a target node, switch a target node, and determine whether rays intersect with child nodes of the switched target node.

Each of the tree traversing units 610 stores information indicating whether information regarding another child node is stored in the memory 620 in a bit stack at every depth of a tree. A depth of a tree indicates a location of a child node with respect to the root node. For example, each of the tree traversing units 610 may store information regarding the other node in the memory 620 and may write a binary 1 to a bit stack, for example.

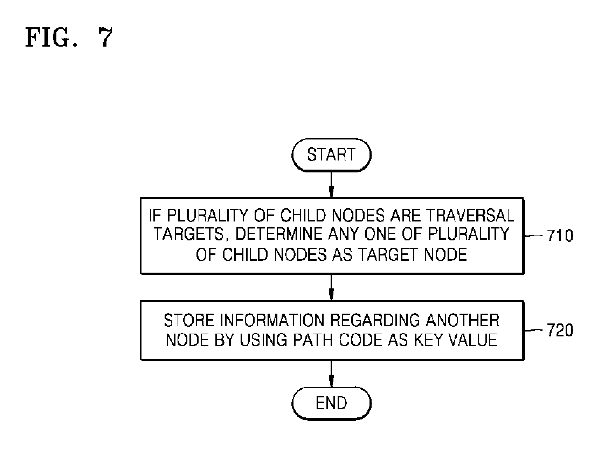

FIG. 7 is a flowchart illustrating a method of traversing a tree, according to an embodiment.

In operation 710, if none of a plurality of child nodes is a valid traversal target, the tree traversing unit 610 determines any one of the plurality of child nodes as a target node. For example, the tree traversing unit 610 may determine any one of child nodes of a root node as a target node.

In operation 720, the tree traversing unit 610 stores information regarding the other node in the memory 620 by using a path code regarding the other child node as a key value.

The tree traversing unit 610 performs a calculation regarding the target node and determines a next target node. If there is a child node that is a valid traversal target, the tree traversing unit 610 determines the corresponding child node as a next target node. If there is no child node that is a valid traversal target, the tree traversing unit 610 may determine a next target node by using path information and a bit stack value regarding the current target node. The tree traversing unit 610 obtains an address of the memory 620 by using a path code and a bit stack value regarding the current target node and reads out information regarding a next target node stored at the obtained address. The tree traversing unit 610 performs a calculation based on the next target node. Information regarding the next target node includes an address and decoding information regarding the next target node.

If there is no next target node, the tree traversing unit 610 may terminate traversal of that particular tree.

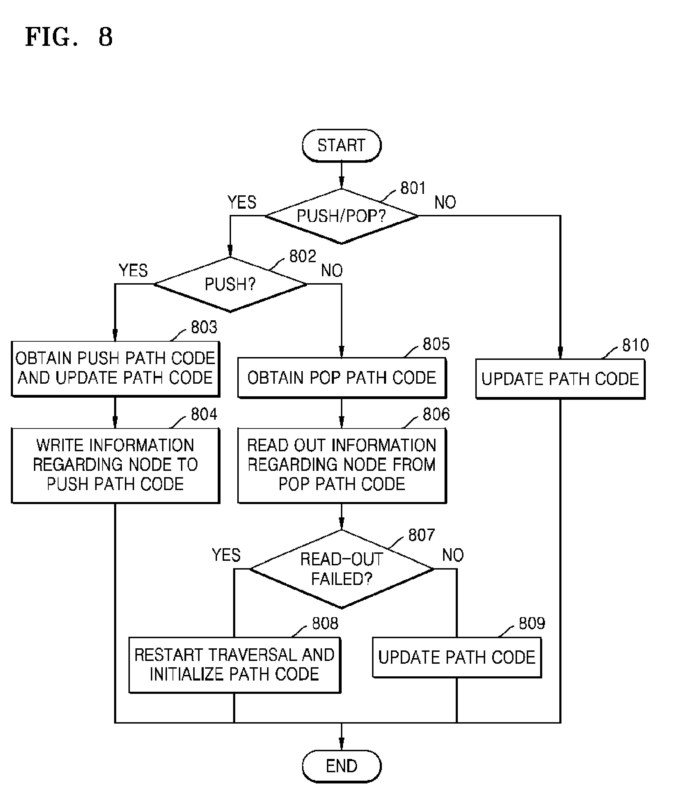

FIG. 8 is a flowchart illustrating an example of a method used by a tree traversing unit to traverse a tree.

In an operation 801, the tree traversing unit 610 determines whether to push or pop a node. Pushing a node refers to storing information regarding the node in the memory 620. Popping a node refers to reading out information regarding the node from the memory 620. The tree traversing units 610 may push a node, which is a valid traversal target to be traversed later, to the memory 620. Furthermore, if there is no node that is a valid traversal target, the tree traversing unit 610 may pop a node stored in the memory 620.

In operation 802, the tree traversing unit 610 determines whether to push a node.

In operation 803, the tree traversing unit 610 obtains a push path code and updates a path code. A push path code may vary according to the node being pushed. A push path code indicates a path of a node to be pushed.

In operation 804, the tree traversing unit 610 writes the information regarding a node to a push path code. In other words, the tree traversing unit 610 determines an address within the memory 620 by using a push path code as a key value and writes information regarding a node to be pushed at the determined address.

In operation 805, the tree traversing unit 610 obtains a pop path code. A pop path code indicates a path of a node to be popped.

In operation 806, the tree traversing unit 610 reads out information regarding a node from a pop path code. In other words, the tree traversing unit 610 determines an address of the memory 620 using a pop path code as a key value and reads out information regarding a node stored at the determined address.

In operation 807, the tree traversing unit 610 determines whether reading out of information regarding a node from the memory 620 has failed. For example, if the memory 620 is a cache memory, the tree traversing unit 610 determines whether a cache miss has occurred.

In operation 808, the tree traversing unit 610 restarts traversal and initializes a path code.

In operation 809, the tree traversing unit 610 updates a path code. The tree traversing unit 610 reads out information regarding a node stored in the memory 620 and updates a path code based on the read out information regarding a node.

In operation 810, the tree traversing units 610 updates a path code.

FIGS. 9, 10, 11, 12, 13, 14, 15, 16, 17, 18, 19, 20, 21, and 22 are diagrams illustrating a method of traversing a tree according to one or more embodiments.

Referring to FIGS. 9 to 22, the tree traversing unit 610 may traverse a root node 0 to a leaf node 8. A left child node is indicated by a path code 0, whereas a right child node is indicated by a path code 1. The path codes may be reversed or path codes other than 0 and 1 may be assigned.

FIG. 9 shows the tree traversing unit 610 beginning a tree traversal. The tree traversing unit 610 starts traversal from the root node 0. The memory 620 may store an address and node data. A path may be indicated as current, next, or push. A bit stack indicates whether a push is performed at each depth of a tree. Current indicates a current path, next indicates a next path, and a push indicates a path of a node pushed to the memory 620.

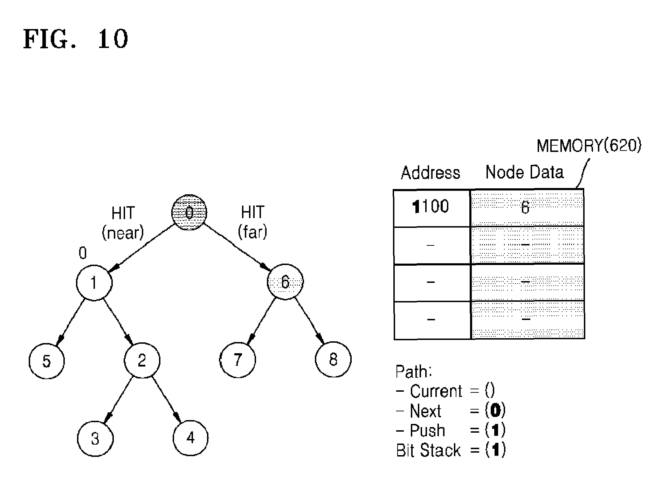

FIG. 10 shows a case in which the left child node 1 of the root node 0 is determined as the next node to be traversed. FIG. 10 shows a case in which both nodes 1 and 6 are valid traversal targets and the left child node 1 is determined as a target node. Since a next node to be traversed is the left child node 1 of the root node 0, the tree traversing units 610 sets next=0.

Since a right child node 6 is a node to be traversed later, the tree traversing unit 610 sets push=1. Since the root node of a tree is hit by a ray, the tree traversing unit 610 sets bit stack=1. Since the tree traversing unit 610 will traverse the node 6 later, the tree traversing unit 610 stores information regarding the node 6 in the memory 620 by using a path of the node 6 as a key value. For example, the tree traversing unit 610 may generate a four-digit binary code 1100 as a path code of the node 6 by using the path of the node 6 (which is 1) and a code 1 indicating termination of a path. In other words, in the code 1100, the leftmost 1 indicates a path, and the second left-most 1 indicates termination of the path. The tree traversing unit 610 stores information regarding the node 6 at an address of the memory 620 corresponding to the code 1100.

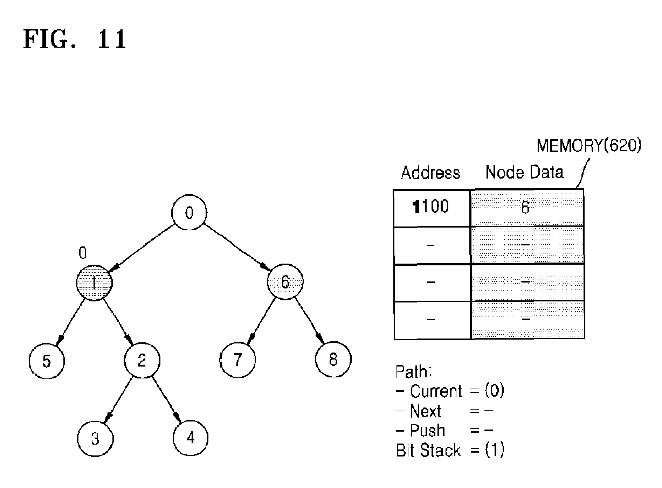

FIG. 11 shows the tree traversing unit 610 traversing the node 1. The tree traversing unit 610 sets current=0.

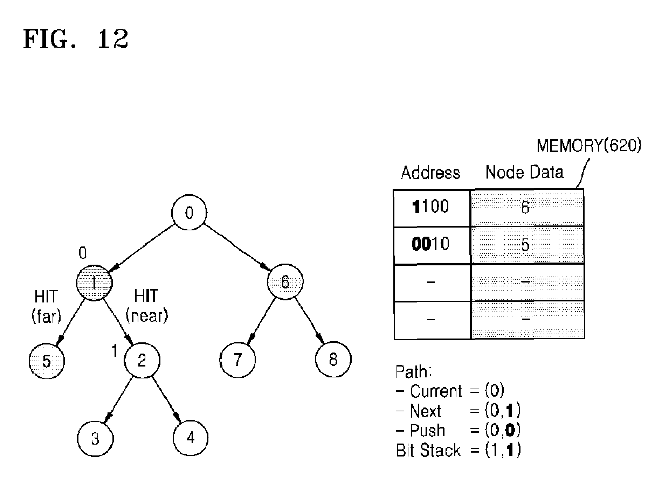

FIG. 12 shows the tree traversing unit 610 pushing a node 5 to the memory 620. Since a node to be traversed next is a right child node 2, the tree traversing unit 610 sets next=(0,1). For example, here, left child node 5 is pushed to the memory 620 because of a determination that the right child node 2 is a nearer hit of the ray than the hit of the left child node 5.

Since the left child node 5 is a node to be traversed later, the tree traversing unit 610 sets push=(0,0). Since the node 1 is hit by a ray, the tree traversing unit 610 sets bit stack=(1,1). Since the tree traversing unit 610 will traverse the node 5 later, the tree traversing unit 610 stores information regarding the node 5 in the memory 620 by using a path of the node 5 as a key value. For example, the tree traversing unit 610 may generate a four-digit binary code 0010 as a path code of the node 5 by using the path of the node 5 (which is (0,0)) and a code 1 indicating termination of a path. In other words, in the code 0010, the left 00 indicates the path, and the next 1 indicates termination of the path. The tree traversing unit 610 stores information regarding the node 5 at an address of the memory 620 corresponding to the code 0010.

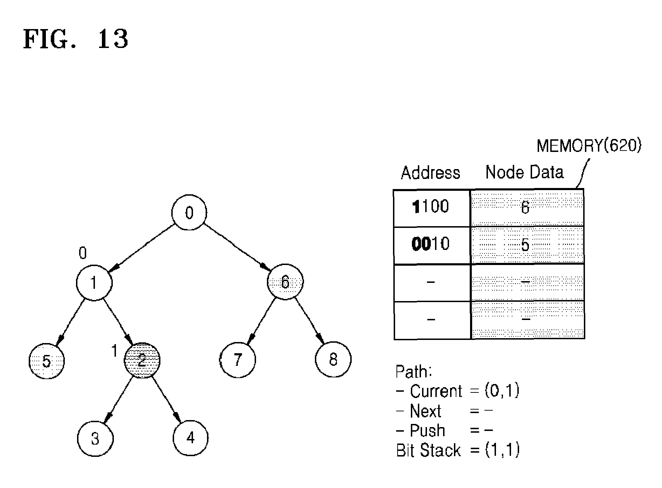

FIG. 13 shows the tree traversing unit 610 traversing the node 2. Since the node 2 is traversed, the tree traversing unit 610 sets current=(0,1), representing the path taken to the current node 2.

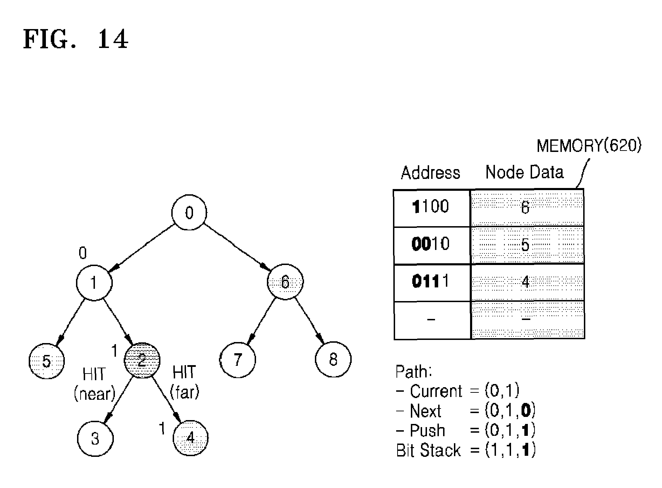

FIG. 14 shows the tree traversing unit 610 pushing a node 4 to the memory 620. Since a node to be traversed next is a left child node 3, the tree traversing unit 610 sets next=(0,1,0), representing the next step in a path toward node 3.

Since the right child node 4 is a node to be traversed later, the tree traversing unit 610 sets push=(0,1,1). Since the node 2 is hit by a ray, the tree traversing unit 610 sets bit stack=(1,1,1). Since the tree traversing unit 610 will traverse the node 4 later, the tree traversing unit 610 stores information regarding the node 4 in the memory 620 by using a path of the node 4 as a key value. For example, the tree traversing unit 610 may generate a four-digit binary code 0111 as a path code of the node 4 by using the path of the node 4 (which is (0,1,1)) and a code 1 indicating termination of a path. In other words, in the code 0111, the left 11 indicates a path, and the next 1 indicates termination of the path. The tree traversing unit 610 stores information regarding the node 4 at an address of the memory 620 corresponding to the code 0111.

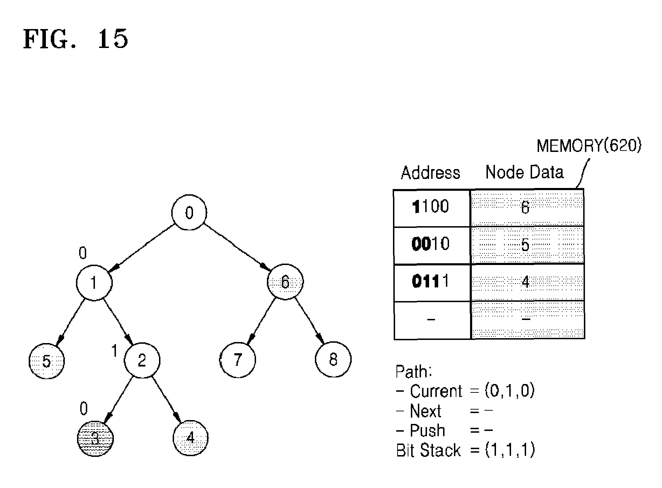

FIG. 15 shows the tree traversing unit 610 traversing the node 3. Since the node 3 is traversed, the tree traversing unit 610 sets current=(0,1,0).

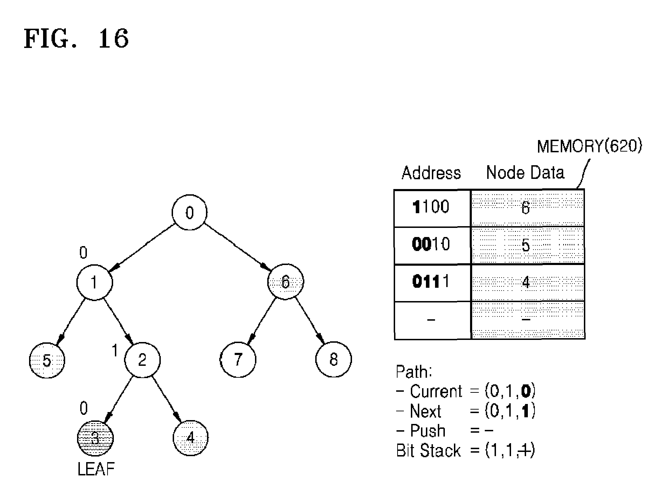

FIG. 16 is a diagram for describing an operation after the tree traversing unit 610 traverses the leaf node 3. Since the node 3 is a leaf node, the node 3 does not have a child node. Since bit stack=(1,1,1), the tree traversing unit 610 reverses the third bit of a current path code and deletes the rightmost bit of the bit stack. The tree traversing unit 610 obtains a path of a next node to be traversed by reversing the third bit of a path code of the node 3. Since the path code of the node 3 is (0,1,0), a path of a next node to be traversed is (0,1,1). In the bit stack=(1,1,1), the right bit is deleted, and thus the bit stack=(1,1).

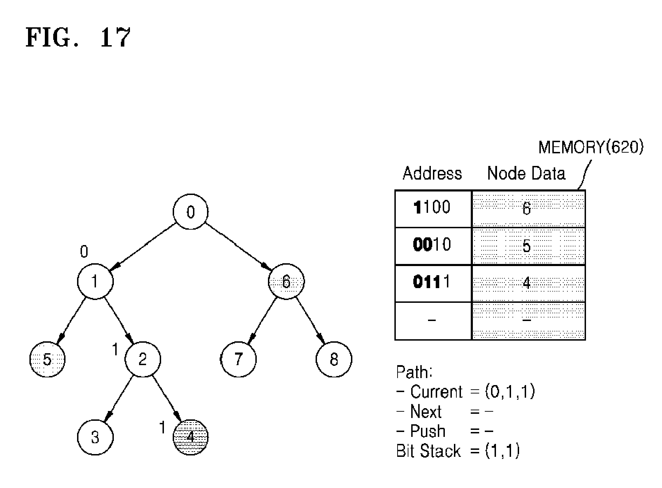

FIG. 17 shows the tree traversing unit 610 traversing the node 4. Since the path code (0,1,1) is obtained as a path code of a next node to be traversed by the tree traversing unit 610, the tree traversing unit 610 obtains an address of the memory 620 by using a code 0111 as a key value and obtains node data stored at an address corresponding to the code 0111. Since the node data stored at an address corresponding to the code 0111 is information regarding the node 4, the tree traversing unit 610 may traverse the node 4 using the information regarding the node 4 retrieved from memory 620.

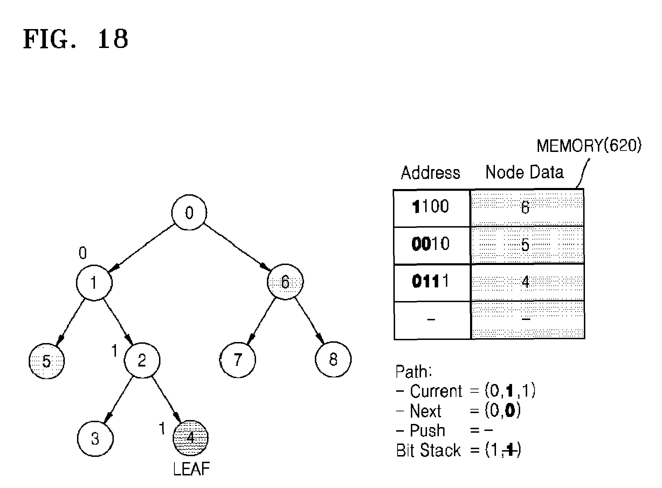

FIG. 18 is a diagram illustrating an operation occurring after the tree traversing unit 610 traverses the leaf node 4. Since the node 4 is a leaf node, the node 4 does not have a child node. Therefore, since bit stack=(1,1), the tree traversing unit 610 obtains a path of a next node to be traversed by reversing the second bit of a path code of the node 4. Since the path code of the node 4 is (0,1,1), a path of a next node to be traversed is (0,0). Furthermore, tree traversing unit 610 deletes the last bit of the bit stack. Therefore, in the bit stack=(1,1), the right bit is deleted, and thus the bit stack is set to bit stack=(1).

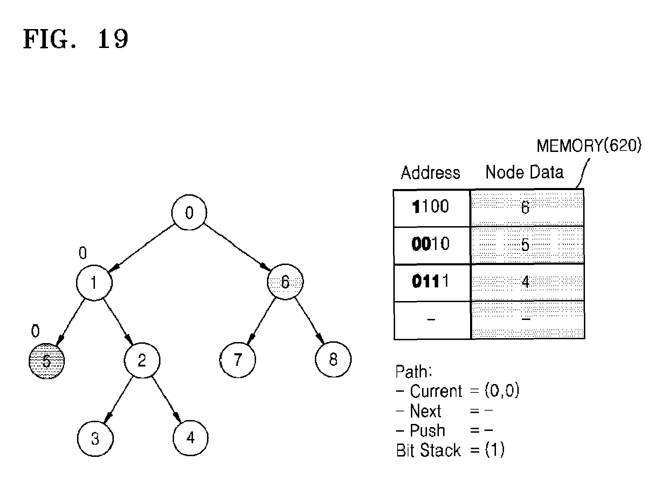

FIG. 19 shows the tree traversing unit 610 traversing the node 5. Since the path code (0,0) is obtained as a path code of a next node to be traversed by the tree traversing unit 610, the tree traversing unit 610 obtains an address of the memory 620 by using a code 0010 as a key value and obtains node data stored at an address corresponding to the code 0010. Since the node data stored at an address corresponding to the code 0010 is information regarding the node 5, the tree traversing unit 610 may traverse the node 5 by using the information regarding the node 5 obtained from memory 620.

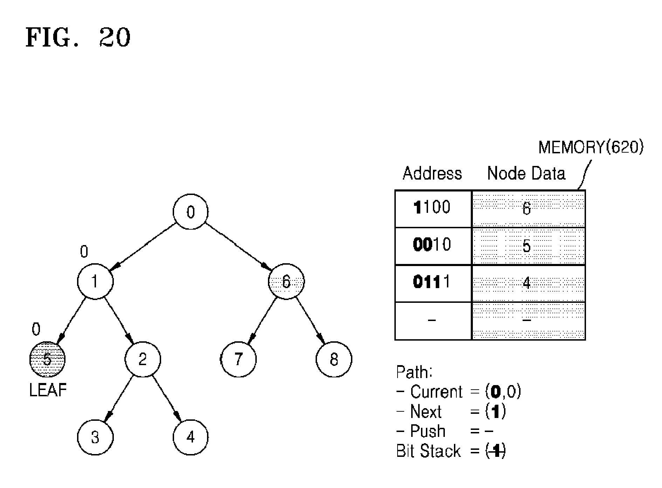

FIG. 20 is a diagram describing an operation occurring after the tree traversing unit 610 traverses the leaf node 5. Since the node 5 is a leaf node, the node 5 does not have a child node. Therefore, since bit stack=(1), the tree traversing unit 610 obtains a path of a next node to be traversed by reversing the first bit of a path code of the node 5. Since the path code of the node 5 is (0,0), a path of a next node to be traversed is (1). Furthermore, tree traversing unit 610 deletes the last bit of the bit stack. Therefore, in the bit stack=(1), 1 is deleted.

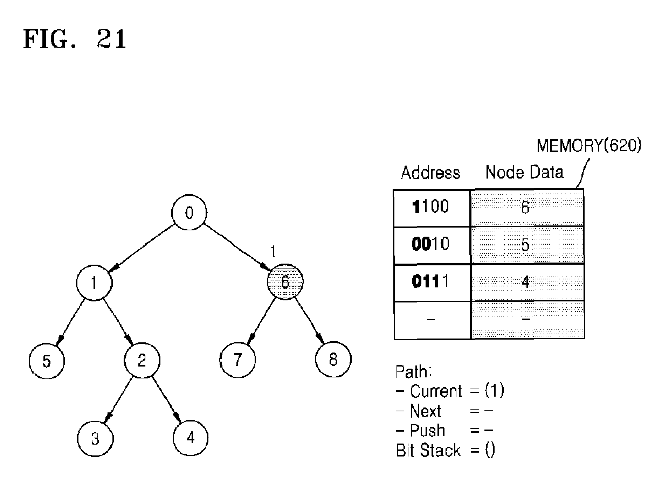

FIG. 21 shows the tree traversing unit 610 traversing the node 6. Since the path code (1) is obtained as a path code of a next node to be traversed by the tree traversing unit 610, the tree traversing unit 610 obtains an address of the memory 620 by using a code 1100 as a key value and obtains node data stored at an address corresponding to the code 1100. Since the node data stored at an address corresponding to the code 1100 is information regarding the node 6, the tree traversing unit 610 may traverse the node 6 by using the information regarding the node 6 obtained from memory 620.

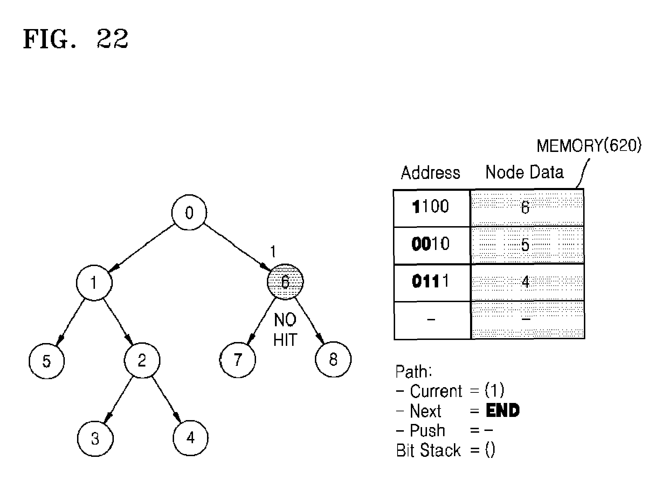

FIG. 22 shows the tree traversing unit 610 terminating traversal. Since the node 6 is not hit by a ray and no value is stored in the bit stack, the tree traversing unit 610 terminates traversal of the tree.

Accordingly, in one or more embodiments, it may not be necessary to independently store node date in respective stack memory for each ray, but the same memory may be used to store node data for plural rays by storing node data according to path information.

As described above, according to the one or more of the above embodiments, information regarding nodes may be stored in a memory shared by tree traversing units.

A tree traversing unit may access the memory by using a path code as a key value.

A tree traversing unit may traverse a tree by using a path code as a key value. The apparatuses, units, modules, devices, and other components illustrated in FIGS. 2, 3, and 6 that perform the operations described herein with respect to FIGS. 1-22 are implemented by hardware components. Examples of hardware components include controllers, sensors, generators, drivers, and any other electronic components known to one of ordinary skill in the art after having a full understanding of the present specification. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art, after having a full understanding of the present specification, that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions, such as an operating system (OS) and one or more software applications that run on the OS, to perform the operations described herein with respect to FIGS. 1-22.

The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1, 4, 5, and 7-22 that perform the operations described herein with respect to FIGS. 2, 3, and 6 are performed by a processor or a computer as described above executing instructions or software to perform the operations described herein.

Instructions to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art after a complete understanding of the present specification can write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art, after a full understanding of the present specification, that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structure. Herein, the terms "unit" and "module" indicate a unit that processes a certain operation, embodied by hardware.

A computer or processor configured to read the code to implement methods with regard to such a "unit" or "module" may be stored in/on a non-transitory an addressable storage medium or other computer or processor readable non-transitory media to be implemented by one or more processing device.

While this specification includes specific examples, it will be apparent to one of ordinary skill in the art that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A ray tracing method of traversing a tree, the method comprising:
based on a determination of whether a plurality of child nodes of a parent node of the tree are valid traversal targets for a first ray, determining any one of the plurality of child nodes to be a target node; and
storing information regarding a remaining child node, of the plurality of child nodes, that is not the target node in a memory by using a path code of the remaining child node as a key value.

2. The method of claim 1, wherein the memory is shared by a plurality of tree traversing units.

3. The method of claim 2, wherein the memory is cache memory.

4. The method of any preceding claim, wherein
path information regarding a current target node, and
a relative location of a next target node,
are used to determine the target node as a next target node.

5. The method of claim 1, further comprising, when the determination of whether the plurality of child nodes are valid traversal targets indicates that none of the plurality of child nodes are a valid traversal target and a bit stack indicating whether information corresponding to a non-root node of the tree are stored in the memory, terminating traversal of the tree.

6. The method of claim 5, further comprising, when the determination of whether the plurality of child nodes are valid traversal targets indicates that none of the plurality of child nodes are a valid traversal target or there are not child nodes for the parent node,
terminating traversal of the parent node,
deriving a path code of a next target node from path information corresponding to the parent node, as a current target node,
updated a value of a bit stack indicating whether information corresponding to a non-root node is stored in the memory, and
obtaining information corresponding to the next target node from the memory by using the path code of the next target node as a key value.

7. The method of claim 6, wherein information corresponding to the next target node comprises an address and decoding information.

8. The method of any preceding claim, further comprising determining a valid traversal target from the plurality of child nodes via an intersection test.

9. The method of any preceding claim, wherein the step of storing information comprises storing, in a bit stack for every depth of the tree, information indicating whether information corresponding to the remaining child node is stored in the memory.

10. A computer program comprising computer program code means adapted to perform all of the steps of any preceding claim when said program is run on a computer..

11. A ray tracing apparatus, comprising:
tree traversing units each configured to, based on a determination of whether a plurality of child nodes of a parent node of the tree are valid traversal targets for a first ray, determine any one of the plurality of child nodes to be a target node; and
a memory configured to store information regarding a remaining child node, of the plurality of child nodes, that is not the target node in a memory by using a path code of the remaining child node as a key value,
wherein the tree traversing units are implemented by one or more processor.

12. The tree traversing apparatus of claim 11, wherein the memory is configured to be shared by at least two of the tree traversing units.

13. The tree traversing apparatus of claim 11 or 12, wherein the memory is cache memory.

14. The tree traversing apparatus of claim 12 or 13, wherein, path information regarding the parent node, as a current target node, and a relative location of a first child of the plurality of child nodes with respect to the first ray is compared to a relative location of a second child node of the plurality of child nodes with respect to the first ray, are used by each of the tree traversing units to determine the target node as a next target node.

15. The tree traversing apparatus of claim 12, 13 or 14, when the determination, by each of the tree traversing units, of whether the plurality of child nodes are valid traversal targets indicates that none of the plurality of child nodes are a valid traversal target and a bit stack indicating whether information corresponding to a non-root node of the tree are stored in the memory, the apparatus is adapted to terminate traversal of the tree.
